# EUROPEAN PATENT SPECIFICATION

(11) **EP 0 568 958 B1**
(45) Date of publication and mention of the grant of the patent: **06.11.1996**
(21) Application number: 93107168.2
(22) Date of filing: 03.05.1993
(51) Int. Cl.: F16C 19/18, B60B 27/00

(54) **A rolling element bearing for a vehicle wheel-support assembly**
Wälzlager für eine Fahrzeugradaufhängung
Palier à roulement pour la suspension d'une roue d'un véhicule

(30) Priority: 05.05.1992 IT TO920120 U
(43) Date of publication of application: 10.11.1993
(73) Proprietor: SKF INDUSTRIE S.P.A., I-10123 Torino (IT)
(72) Inventor: Bertetti, Paolo, I-10153 Torino (IT); Bertalmio, Stefano, I-10064 Pinerolo (IT)
(74) Representative: Plebani, Rinaldo

(56) References cited:
- EP-A- 0 310 389
- EP-A- 0 371 836
- FR-A- 2 514 301
- IT-A- 679 724
- US-A- 4 421 197

## Description

The present invention relates to a rolling element bearing usable in a support assembly for a vehicle wheel, particularly to support rotatably a non-driving or free wheel of a motor car.

The rolling element bearings normally used in free wheel assemblies are of the so-called "second generation" type and are characterised in that their outer ring has an attachment flange to which the vehicle wheel is directly connectable; in this type of bearing, therefore, the outer ring acts directly as the wheel hub. To this end, at the wheel attachment flange, the outer ring also has an integral centring device for the wheel itself and for a respective braking element of the wheel, for example a brake disc or drum. The inner ring of the bearing, usually subdivided into two ring-halves, is mounted in conventional manner (for example clamped against an axial shoulder by a threaded nut) on a stub axle of the wheel assembly which is fixed in turn to the vehicle's suspension.

Bearings of the type described have certain disadvantages; first, the presence of the centring collar makes the manufacture of the outer ring complicated and expensive right from the forging stage; in addition it obscures the rolling element track, substantially formed in correspondence with the flange (these bearings are usually of the oblique contact type, with two rings of rolling elements - balls or conical rollers): this involves considerable difficulty during manufacture to grind this track and, above all, it prevents the track from being optimally filled with rolling elements during assembly thereby reducing the bearing's load capacity compared to similar bearings of the same size. Finally, any treatment to be carried out on the centring collar, for example the necessary anti-rust treatments (zinc plating, Dacromet, etcetera) must be carried out on the entire outer ring or, if this is unacceptable, will involve greater cost owing to the need to protect the tracks and other parts which must not be treated.

A further disadvantage consists in the fact that the presence of the collar makes it substantially impossible to mount a normal seal assembly for the protection of the rolling elements on the side of the wheel attachment flange, that is just in the area most exposed to external contaminants. The seal must therefore be provided by a plate cover which is fitted on the terminal end of the collar, of necessity after the wheel assembly has been mounted and therefore under the responsibility of the user of the bearing. Besides complicating the mounting of the wheel assembly, and making it more expensive, this does not always ensure an optimum seal or, therefore, effective protection of the rolling elements.
The disadvantages described have not been overcome, but partially, by providing the collar as a separate element, like e.g. shown in EP-A-0371836 , which shows a rolling element bearing in accordance with the preamble of claim 1, and FR-A-2514301.

The object of the invention is to overcome the disadvantages described, and in particular to provide a rolling element bearing which can be used instead of bearings of the type described but which is cheaper, easier to manufacture and assemble and has a greater load bearing capacity, as well as providing the bearing itself with effective protection of its rolling elements.

According to the invention there is provided a rolling element bearing for a vehicle wheel support assembly, of the type including an inner ring, an outer ring, a plurality of rolling elements housed in an annular chamber defined between the said inner and outer rings and cooperating with respective annular tracks formed in the rings so that they are relatively rotatable with low friction, and centring means for a wheel and an associated braking element which may be mounted for rotation with the outer ring, as claimed in Claim 1.

In order better to understand the invention, a non-limitative description follows of one embodiment, with reference to the appended drawings, in which:
Figure 1 shows a vehicle wheel support assembly with a bearing according to the invention;
Figure 2 shows an enlarged radial section of the bearing used in the wheel support assembly of Figure 1; and
Figure 3 shows the same section as Figure 2, in each half of which a detail of the bearing of Figure 2 has been replaced by a possible variant.

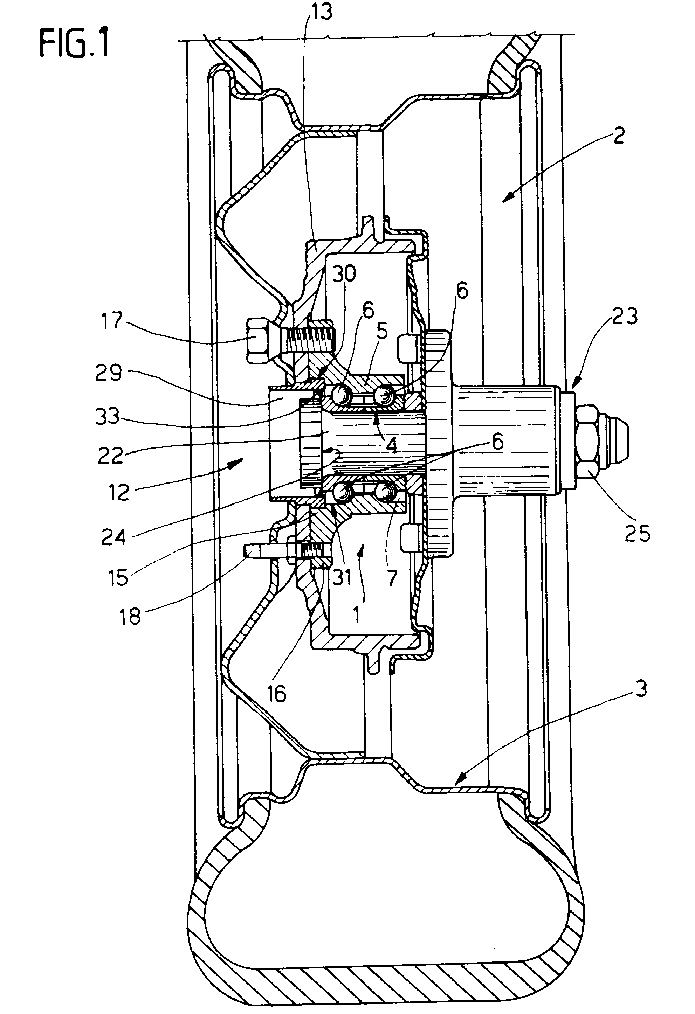

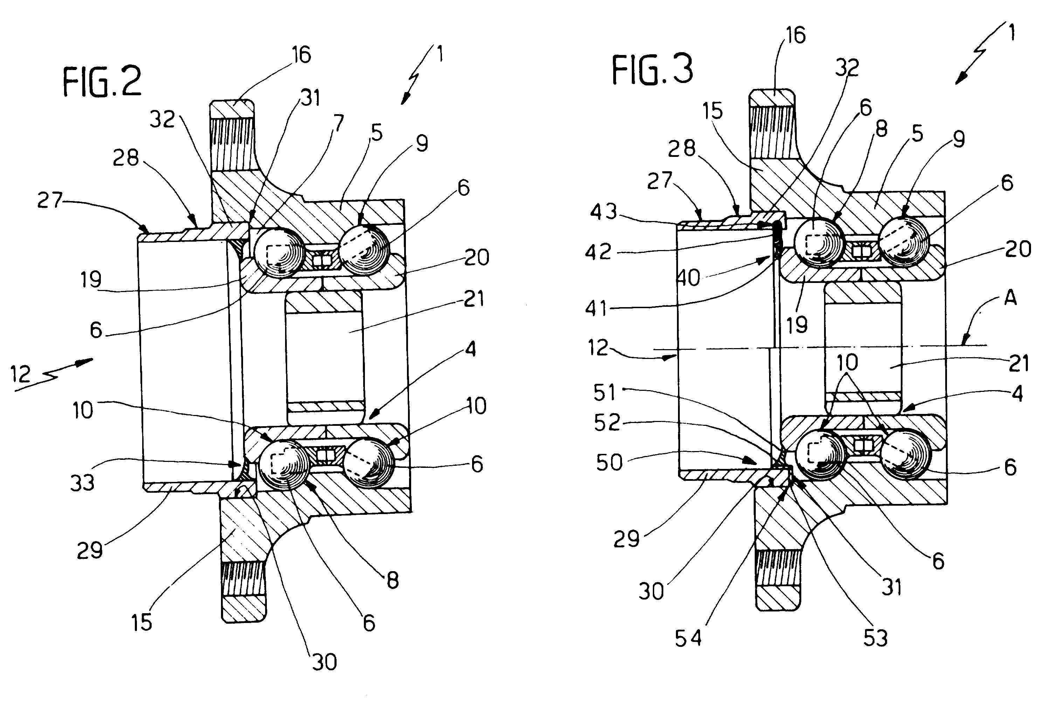

With reference to Figures 1 and 2, there is shown a rolling element bearing, generally indicated 1, which can be used in a wheel support assembly 2, particularly for a non-driving wheel (free wheel) of a vehicle, not illustrated for the sake of simplicity.

The bearing 1 includes an inner ring 4, an outer ring 5, a plurality of rolling elements 6 housed in an annular chamber 7 defined between the rings 4 and 5 and cooperating with respective annular tracks 8, 9 and 10 formed in the rings 4 and 5 so as to make them relatively rotatable with low friction, and centring means for the wheel 3 and for an associated braking element 13 which can be mounted, together with the wheel 3, to the outer ring 5 for rotation therewith.

In particular, the outer ring 5 has one end 15 with an outer radial flange 16 for attaching the wheel 3 and its associated braking element 13, in this case a known brake disc or drum, clamped together with the wheel 3, tightly against the flange 13 by screws 17. The flange 16, which also has a centring pin for mounting the wheel 3, is formed flush with the end 15 of the outer ring 5 and integral with the latter. In the preferred embodiment of the invention, illustrated by way of non-limitative example, the inner ring 4 is subdivided into two ring-halves; these are held together, when the bearing 1 is not mounted on the wheel assembly 2 (Figure 2) by a known disposable support ring 21. When the bearing 1 is mounted on the wheel assembly 2 (Figure 1) the ring-halves are supported by a stub axle 22 of a suspension 23 of the vehicle, this suspension being known and illustrated only in part for the sake of simplicity, and are clamped axially together on the stub axle 22 in a conventional manner, between an axial shoulder 24 of the stub axle 22 and a threaded clamping nut 25.

The bearing 1 is of the oblique contact type and the rolling elements 6, in this case balls (but they could also be conical rollers) are housed in two rings formed between a first pair of facing tracks 8 and 10 and a second pair of facing tracks 9 and 10 respectively; the tracks of each pair are formed on the outer ring 5 (8 and 9) and on the inner ring 4 (10) respectively. The track 8 is formed on the ring 5 near its end 15, substantially in correspondence with the flange 16, while the track 9 is formed near the opposite end.

According to the invention, the centring means 12 are defined by two respective cylindrical contact surfaces 27 and 28 (Figure 2), of different diameter, formed coaxial to each other on the outer periphery of a sleeve 29; this latter is in turn formed as a separate element from the ring 5, but force-fitted axially into a frontal socket 30 of the ring 5 itself to project therefrom, so as to be coaxial of and fixed for rotation with the ring 5. The frontal socket 30 into which the sleeve 29 is force fitted is defined by a cylindrical cavity (indicated with the same number) formed in an inner peripheral surface of the outer ring 5, along with the tracks 8, 9, and extending from a point flush with the flange 16 to a position immediately adjacent the track 8; the cylindrical cavity 30 has a larger diameter than that of the track 8 and ends, near the track 8, in an axial annular shoulder 31 against which the sleeve 29 bears.

According to a further characteristic of the invention, at its end 32 for coupling with the cylindrical cavity 30, the added sleeve 29 of the bearing 1 has a seal element 33 slidably cooperating to form a fluid-tight seal with the inner ring 4, thereby ensuring that the annular chamber 7 housing the rolling elements 6 is fluid-tight on the flange side thereof. According to the embodiment illustrated in Figures 1 and 2, the seal element 33 is constituted by an elastomeric annular element formed coaxially inside the coupling end 32 of the sleeve 29 and fixed securely thereto; for example the elastomeric element 33 may be moulded onto the sleeve 29 and secured to it with adhesive during the Vulcanization phase, according to a known procedure.

With reference to Figure 3 (where details which are similar to or the same as those already described are indicated with the same reference numerals for the sake of simplicity), the sleeve 29 may be formed in such a way as to receive and use a seal element made as a separate element. For example, the upper part of Figure 3 (relative to a symmetrical axis A) shows a sleeve 29 with a seal element 40 including at least one lip 41, made of elastomeric material and cooperating frontally and/or radially with the inner ring 4, and a coupling element 42 securely fixed to the elastomeric lip 41 and snap-engaged in an annular seat 43 formed inside the coupling end 32 of the sleeve 29.

With reference to the lower part of Figure 3 (still relative to the axis A), a sleeve 29 has a seal element 50 which includes at least one lip 51 of elastomeric material cooperating with the inner ring 4 and an annular reinforcement which in radial section is shaped like an inverted L and includes a tubular portion 52, carrying the elastomeric lip 51 on its radially inner side and fitted on its radially outer side into the coupling end 32 of the sleeve 29, and a flange portion 53 clamped between a frontal edge 54 of the coupling end 32 and the terminal annular shoulder of the cavity 30.

The advantages offered by the bearing according to the present invention become clear from the above description. The conventional centring collar formed integrally on the outer ring of the bearing is replaced by a force-fitted element: on the one hand this simplifies the manufacture of the outer ring, while on the other it provides a centring collar formed as an independent sleeve which is easily and very cheaply manufactured either by turning from metal pipe or by pressing from metal sheet; such a sleeve may also be subjected to any surface passivation or plating process without affecting the rest of the outer ring, thereby further reducing costs and further simplifying manufacture (it is no longer necessary to protect the tracks 8, 9 from the plating agent). In addition, the system of coupling to the outer ring by means of a cylindrical force-fit cavity formed opposite the track 8 and having a diameter greater than that of the track itself, enables all mechanical work on the track 8 to be carried out easily and economically through the cavity 30; using the latter cavity as an opening towards the track 8 it is also possible, while assembling the bearing, to house a greater number of rolling elements 6 between the tracks 8, 9 thereby obtaining optimum filling and improving the load-bearing capacity of the bearing compared to another bearing of the same size.

However, the greatest advantage of the bearing according to the invention, with an added centring collar formed as an independent sleeve, lies in the use of sleeve 29 as the support for a seal element. This greatly simplifies the mounting of the wheel assembly 2 and, above all, ensures a more reliable and more efficient protection of the rolling elements than do conventional arrangements using a cover plate.

## Claims

1. A rolling element bearing (1) for a vehicle wheel support assembly, of the type including an inner ring (4), an outer ring (5), a plurality of rolling elements (6) housed in an annular chamber defined between the said inner and outer rings (4,5) and cooperating with respective annular tracks formed in the said rings so as to make them relatively rotatable with low friction, and centring means (12) for a wheel and an associated brake element mountable for rotation with the outer ring (5); the said centring means (12) being defined by two respective cylindrical contact surfaces (27,28) of different diameter, at least one of which is formed on the outer periphery of a sleeve (29) which is formed as an independent element and force-fitted axially in a frontal seat (30) of the outer ring (5) to project therefrom, in such a way as to be fixed for rotation with the outer ring (5) and against axial movement with respect thereto; characterised in that also a second one of said contact surfaces (27,28) is formed on said sleeve; and in that at its end (32) for coupling with the said frontal seat (30) of the outer ring (5), the said sleeve (29) has a seal element (33, 40, 50) which cooperates slidably with the inner ring (4) of the bearing to provide a fluid-tight seal on the flange side of the said annular chamber housing the rolling elements (6).

2. A bearing according to Claim 1, characterised in that at one end the outer ring (5) has an outer peripheral attachment flange (16) for the said wheel and associated braking element, the flange (16) being formed flush with the said end and integral with the outer ring (5) itself; the frontal seat (30) for force-fitting of the said sleeve being defined by a cylindrical cavity formed in the inner periphery of the outer ring (5) to extend from flush with the said flange (16) to a position immediately adjacent a said track (8) of the outer ring (5) formed near the said end of this latter; the said cylindrical cavity (30) having an inner diameter greater than that of the said track (8) and ending, towards the said track, in an axial annular shoulder (31) against which the said sleeve (29) bears.

3. A bearing according to Claim 1, characterised in that the said seal element (33) is constituted by an elastomeric annular element formed coaxially inside the said coupling end (32) of the sleeve (29) and securely fixed directly thereto; the said elastomeric element (33) having been moulded onto sleeve (29) and securely fixed thereto with adhesive during the vulcanization stage.

4. A bearing according to Claim 1, characterised in that the said seal element (40) includes at least one lip (41) of elastomeric material which cooperates frontally with the said inner ring (4), and a coupling element (42) securely fixed to the elastomeric lip (41) and snap-engaging an annular seat (43) formed inside the coupling end (32) of the sleeve (29).

5. A bearing according to Claim 1, characterised in that the said seal element (50) includes at least one lip (51) of elastomeric material cooperating with the said inner ring (4) and an annular reinforcement (52) shaped as an inverted L in radial section and including a tubular portion carrying the elastomeric lip (51) on its radially inner side and fitted on its radially outer side into the coupling end (32) of the sleeve (29), and a flange portion (53) clamped between a frontal edge (54) of the coupling end (32) of the sleeve (29) and the said terminal axial annular shoulder (31) of the cylindrical cavity (30) of the outer ring (5).

## Patentansprüche

1. Wälzlager (1) für eine Fahrzeugradaufhängung mit einem inneren Ring (4), einem äußeren Ring (5), einer Anzahl von Wälzkörpern (6), die in einer ringförmigen Kammer aufgenommen sind, welche zwischen dem inneren und dem äußeren Ring (4, 5) ausgebildet ist, und mit zugehörigen ringförmigen Laufbahnen zusammenwirken, die in den Ringen ausgeformt sind, so daß diese mit geringer Reibung relativ zueinander drehbar sind, sowie mit Zentrierungsmitteln (12) für ein Rad und ein zugehöriges Bremselement, die zur gemeinsamen Drehung mit dem äußeren Ring (5) befestigbar sind, wobei die Zentrierungsmittel (12) aus zwei zylindrischen Kontaktflächen (27, 28) mit unterschiedlichem Durchmesser gebildet sind, von denen wenigstens eine auf dem äußeren Umfang einer Hülse (29) ausgeformt ist, die als separates Teil hergestellt und im Preßsitz in einen frontalen Sitz (30) des äußeren Rings (5), von diesem hervorstehend, derart eingefügt ist, daß sie mit dem äußeren Ring (5) drehstarr und axial fest verbunden ist, **dadurch gekennzeichnet**, daß auch die zweite Kontaktfläche (27 bzw. 28) auf der Hülse (29) ausgeformt ist und daß diese an ihrem mit dem frontalen Sitz (30) des äußeren Rings (5) zu verbindenden Ende (32) ein Dichtelement (33, 40, 50) aufweist, das mit dem inneren Ring (4) des Lagers gleitend zusammenwirkt, um eine flüssigkeitsundurchlässige Abdichtung an der Flanschseite der ringförmigen, die Wälzkörper (6) aufnehmenden Kammer zu schaffen.

2. Wälzlager nach Anspruch 1, **dadurch gekennzeichnet**, daß der äußere Ring (5) an einem Ende am äußeren Umfang einen Befestigungsflansch (16) für das Rad und das zugehörige Bremselement aufweist, der fluchtend mit dem Ende und einstückig mit dem äußeren Ring (5) selbst ausgebildet ist, und daß der frontale Sitz (30) zum Einpressen der Hülse durch eine zylindrische Ausnehmung gebildet ist, die im Innenumfang des äußeren Rings (5) so ausgeformt ist, daß sie sich von der Flucht mit dem Flansch (16) bis in die Nähe der Laufbahn (8) des äußeren Rings (5) erstreckt, die nahe diesem Ende in ihm ausgebildet ist, wobei die zylindrische Ausnehmung (30) einen größeren inneren Durchmesser als die Laufbahn (8) besitzt und in Richtung der Laufbahn an einem axialen, ringförmigen Absatz (31) endet, an welchem die Hülse (29) anliegt.

3. Wälzlager nach Anspruch 1, **dadurch gekennzeichnet**, daß das Dichtelement (33) aus einem elastomeren Ringelement besteht, das innerhalb des Verbindungsendes (32) der Hülse (29) koaxial ausgebildet und unmittelbar an dieser befestigt ist, wobei das elastomere Element (33) auf die Hülse (29) aufgeformt und während des Vulkanisierungsvorgangs mit einem Klebemittel an dieser sicher befestigt ist.

4. Wälzlager nach Anspruch 1, **dadurch gekennzeichnet**, daß das Dichtelement (40) wenigstens eine Lippe (41) aus elastomerem Material, die vorne mit dem inneren Ring (4) zusammenwirkt, und ein Verbindungselement (42) aufweist, das mit der elastomeren Lippe (41) fest verbunden und in einen ringförmigen Sitz (43) eingeschnappt ist, der im Inneren des Verbindungsendes (32) der Hülse (29) ausgebildet ist.

5. Wälzlager nach Anspruch 1, **dadurch gekennzeichnet**, daß das Dichtelement (50) wenigstens eine Lippe (51) aus elastomerem Material, die mit dem inneren Ring (4) zusammenwirkt, und eine ringförmige Verstärkung (52) aufweist, die im Querschnitt eine umgekehrte L-Form besitzt und einen rohrförmigen Teil, der die elastomere Lippe (51) an seiner radial inneren Seite trägt und mit seiner radial äußeren Seite in das Verbindungsende (32) der Hülse (29) eingesetzt ist, sowie einen Flanschteil (53) aufweist, der zwischen einer vorderen Kante (54) des Verbindungsendes (32) der Hülse (29) und dem endseitigen axialen, ringförmigen Absatz (31) der zylindrischen Ausnehmung (30) des äußeren Rings (5) festgeklemmt ist.

## Revendications

1. Palier à roulement (1) pour un ensemble de support de roue de véhicule, du type comprenant une bague intérieure (4), une bague extérieure (5), une pluralité de corps roulants (6) logés dans une chambre annulaire définie entre lesdites bagues intérieure et extérieure (4, 5) et coopérant avec des pistes annulaires respectives formées dans lesdites bagues de façon à leur permettre de tourner relativement avec peu de frottement, et un moyen de centrage (12) pour une roue et un élément de freinage associé pouvant être montés pour tourner avec la bague extérieure (5), ledit moyen de centrage (12) étant défini par deux surfaces de contact respectives (27, 28), cylindriques, de diamètre différent, dont l'une au moins est formée sur la périphérie extérieure d'un manchon (29) qui est constitué d'un organe indépendant et qui est emboîté de force dans le sens axial dans un logement frontal (30) de la bague extérieure (5) pour en faire saillie de manière à être fixé pour tourner avec la bague extérieure (5) sans pouvoir se déplacer axialement par rapport à elle,
caractérisé en ce qu'une seconde desdites surfaces de contact (27, 28) est également formée sur ledit manchon et en ce qu'en son extrémité (32) devant être couplée audit logement frontal (30) de la bague extérieure (5), ledit manchon (29) comporte un élément formant joint (33, 40, 50) qui coopère par glissement avec la bague intérieure (4) du palier pour former un joint étanche aux fluides sur le côté collerette de ladite chambre annulaire qui loge les corps roulants (6).

2. Palier selon la revendication 1, caractérisé en ce qu'en une extrémité, la bague extérieure (5) comporte une collerette de fixation (16), extérieure et périphérique, pour ladite roue et ledit élément de freinage associé, la collerette (16) étant affleurante avec ladite extrémité et faisant corps avec la bague extérieure (5) elle-même, le logement frontal (30) servant à l'emboîtement de force dudit manchon étant défini par une cavité cylindrique formée dans la périphérie intérieure de ladite bague extérieure (5) pour s'étendre du niveau de ladite collerette (16) jusqu'à une position qui est immédiatement adjacente à ladite piste (8) de la bague extérieure (5) formée près de ladite extrémité de cette dernière, ladite cavité cylindrique (30) ayant un diamètre intérieur supérieur à celui de ladite piste (8) et se terminant, du côté de ladite piste, par un épaulement axial annulaire (31) contre lequel porte ledit manchon (29).

3. Palier selon la revendication 1, caractérisé en ce que ledit élément formant joint (33) est constitué par un élément annulaire en élastomère formé coaxialement à l'intérieur de ladite extrémité d'accouplement (32) du manchon (29) et fixé directement à celle-ci de manière inamovible, ledit élément en élastomère (33) ayant été moulé sur le manchon (29) et rendu solidaire de celui-ci au moyen d'un adhésif pendant l'étape de vulcanisation.

4. Palier selon la revendication 1, caractérisé en ce que ledit élément formant joint (40) comprend au moins une lèvre (41) en matériau élastomère qui coopère sur le devant avec ladite bague intérieure (4) et un élément d'accouplement (42) rendu solidaire de ladite lèvre en élastomère (41) et s'encliquetant dans un logement annulaire (43) formé à l'intérieur de l'extrémité d'accouplement (32) du manchon (29).

5. Palier selon la revendication 1, caractérisé en ce que ledit élément formant joint (50) comprend au moins une lèvre (51) en matériau élastomère qui coopère avec ladite bague intérieure (4) et un renfort annulaire (52) ayant, en coupe radiale, la forme d'un L inversé et comprenant une partie tubulaire qui porte la lèvre en élastomère (51) sur sa face radialement intérieure et est emboîtée, sur sa face radialement extérieure, dans l'extrémité d'accouplement (32) du manchon (29), et une partie formant rebord (53) pincée entre un bord frontal (54) de l'extrémité d'accouplement (32) du manchon (29) et ledit épaulement annulaire axial (31) d'extrémité de la cavité cylindrique (30) de la bague extérieure (5).
